# EUROPÄISCHE PATENTSCHRIFT

(11) **EP 3 688 254 B1**
(45) Veröffentlichungstag und Bekanntmachung des Hinweises auf die Patenterteilung: **18.08.2021**
(21) Anmeldenummer: 18734743.0
(22) Anmeldetag: 25.05.2018
(51) Int. Cl.: E05B 77/08, E05B 83/24, B60R 21/38, E05B 81/02, E05B 51/02, E05B 17/00

(54) **SCHLIESSVORRICHTUNG FÜR EIN BEWEGLICHES TEIL EINES FAHRZEUGES UND BETÄTIGUNGSVERFAHREN FÜR EINE SCHLIESSVORRICHTUNG**
LOCKING DEVICE FOR A MOVABLE PART OF A VEHICLE AND A METHOD FOR A LOCKING DEVICE
DISPOSITIF DE PRÉHENSION CONÇU POUR UNE PIÈCE MOBILE D'UN VÉHICULE ET MÉTHODE D'UN DISPOSITIF DE PRÉHENSION

(30) Priorität: 28.09.2017 DE 102017122573
(43) Veröffentlichungstag der Anmeldung: 05.08.2020
(73) Patentinhaber: Kiekert AG, 42579 Heiligenhaus (DE)
(72) Erfinder: WEICHSEL, Ulrich, 47249 Duisburg (DE); SCHIFFER, Holger, 40668 Meerbusch (DE); INAN, Ömer, 46282 Dorsten (DE); SUHOLUTSKAJA, Elena, 40591 Düsseldorf (DE)
(86) Internationale Anmeldenummer: PCT/DE2018/100513
(87) Internationale Veröffentlichungsnummer: WO 2019/063036

(56) Entgegenhaltungen:
- DE-A1-102005 060 750
- DE-A1-102007 021 840
- DE-A1-102011 076 770
- JP-A- 2016 175 548

## Beschreibung

Die vorliegende Erfindung betrifft eine Schließvorrichtung für ein bewegliches Teil eines Fahrzeugs gemäß dem Oberbegriff des ersten unabhängigen Patentanspruchs sowie ein Betätigungsverfahren für eine Schließvorrichtung eines beweglichen Teils eines Fahrzeugs gemäß dem unabhängigen Verfahrensanspruch.

Personenunfälle zwischen einem Kraftfahrzeug und einem Fußgänger führen in der Regel zu schweren Verletzungen des Fußgängers, insbesondere durch den Aufprall des Fußgängers auf die Motorhaube.

Die Druckschriften DE 10 2011 076 770 A1, DE 10318796 B4, DE 10 2011 114 148 A1, EP 248 1645 A1 und KR 2010 0006 257 A offenbaren Motorhaubenschlösser mit Fußgängeraufprallschutz.

Nachteilig bei den aus dem Stand der Technik bekannten Lösungen ist es allerdings, dass die Schließvorrichtungen konstruktiv aufwendig und teuer sind.

Es ist Aufgabe der vorliegenden Erfindung, die voranstehenden aus dem Stand der Technik bekannten Nachteile zumindest teilweise zu beheben. Darüber hinaus ist es die Aufgabe der vorliegenden Erfindung eine kostengünstige Schließvorrichtung für ein bewegliches Teil eines Fahrzeugs mit einem Überlastschutz und erweiterter Funktionalität bereitzustellen.

Die voranstehende Aufgabe wird gelöst durch eine Schließvorrichtung für ein bewegliches Teil eines Fahrzeugs gemäß dem unabhängigen Vorrichtungsanspruch und ein Betätigungsverfahren mit den Merkmalen des unabhängigen Verfahrensanspruchs.

Weitere Merkmale und Details der Erfindung ergeben sich aus den Unteransprüchen, der Beschreibung und den Zeichnungen. Dabei gelten Merkmale und Details den Zusammenhang mit der erfindungsgemäßen Vorrichtung beschrieben worden sind, selbstverständlich auch im Zusammenhang mit dem erfindungsgemäßen Verfahren und jeweils umgekehrt, sodass bezüglich der Offenbarung zu den einzelnen Erfindungsaspekten stets wechselseitig Bezug genommen wird bzw. werden kann.

Durch die in den abhängigen Ansprüchen aufgeführten Maßnahmen sind vorteilhafte Weiterbildung und Verbesserungen der in den unabhängigen Ansprüchen angegebenen Erfindungsgegenstände möglich.

Erfindungsgemäß weist die Schließvorrichtung für ein bewegliches Teil eines Fahrzeugs, insbesondere für eine Frontklappe eines Fahrzeugs, ein karosserieseitig lagerbares Gesperre zur Aufnahme eines an dem beweglichen Teil angeordneten Schlosshalter sowie ein mit dem Schlosshalter in Kontakt bringen Aufstellmechanismus zum Bewegen des beweglichen Teils in zumindest eine Schutzstellung auf, wobei der Aufstellmechanismus zumindest einen ersten Überlastschutz aufweist, wodurch das bewegliche Teil im Lastfall von der Schutzstellung in eine Aufprallstellung bewegbar ist.

Im Rahmen der Erfindung soll unter dem beweglichen Teil eines Fahrzeugs, insbesondere eine Frontklappe, beispielsweise eine Motorhaube oder Kofferraumklappe, insbesondere für in Vorwärtsfahrtrichtung vor der Fahrgastzelle angeordnete Bereiche eines Fahrzeugs, verstanden werden.

Ein Gesperre setzt sich erfindungsgemäß aus einer Drehfalle und mindestens einer Sperrklinke zusammen, die den Schlosshalter in einer Schließstellung des beweglichen Teils in einer Schließstellung fixieren und in einer Offenstellung freigeben. Die Schließstellung des beweglichen Teils wird zum Betrieb des Fahrzeugs eingenommen. Beispielsweise kann bei einer Motorhaube diese fluchtend mit der sichtbaren Außenseite in der vorgesehenen Schließstellung mit der angrenzenden Fahrzeugkarosserie angeordnet sein. In der Regel weist eine Motorhaube in der vorgesehenen Schließstellung an der Innenseite einen festgelegten Abstand zu der angrenzenden Fahrzeugkarosserie auf, sodass sich die Motorhaube ohne die Schließvorrichtung über die vorgesehene Schließstellung hinaus in Richtung der Fahrzeugkarosserie bewegen und gegebenenfalls auf die Fahrzeugkarosserie aufschlagen könnte.

Die Schutzstellung weist in der Regel einen Abstand von der vorgesehenen Schließstellung in Richtung der vorgesehenen Offenstellung auf, also in Richtung einer Öffnungsbewegung, sodass eine Hand nur flach von außen zwischen die Motorhaube und die Fahrzeugkarosserie hineingesteckt werden kann. Nur flach meint hierbei, dass die Handfläche parallel zur Motorhaube orientiert ist und oder eine quer dazu gehaltene Hand nicht zwischen die Motorhaube und die Fahrzeugkarosserie hineingesteckt werden kann.

Ein entsprechender Fußgängerunfall, bei dem der Fußgänger auf die Motorhaube aufprallt, führt zu einer Kraft auf den Schlosshalter des beweglichen Teils, sodass der Schlosshalter eine Kraft auf das Gesperre ausübt. Dementsprechend wird das bewegliche Teil in Richtung Motorinnenraum und somit über die Schließstellung hinaus bewegt. Ein erfindungsgemäßer Aufstellmechanismus führt nunmehr dazu, dass das bewegliche Teil von einer Schließstellung in eine Schutzstellung bewegt werden kann. Dementsprechend wird das bewegliche Teil durch den Aufstellmechanismus in Richtung Offenstellung des beweglichen Teils bewegt.

Es ist denkbar, dass das bewegliche Teil für die Schutzstellung zwischen ungefähr 10 mm und 50 mm, bevorzugt zwischen 15 mm und 40 mm, besonders bevorzugt zwischen 20 mm und 30 mm angehoben wird. Im Vergleich zu Schließstellung.

Erfindungsgemäß weist der Aufstellmechanismus zumindest einen ersten Überlastschutz auf, wodurch das bewegliche Teil im Lastfall von der Schutzstellung in eine Aufprallstellung bewegbar ist. Somit kann das bewegliche Teil aus der Schutzstellung, in der das bewegliche Teil um den zuvor erwähnten Aufstellweg gegenüber der Schließstellung angehoben angeordnet ist, zurück in Richtung Schließstellung bewegt werden. Dementsprechend nimmt das bewegliche Teil im Lastfall, beispielsweise bei einem Fußgängerunfall, bei dem der Fußgänger auf die Motorhaube aufprallt, eine Bewegung in eine Aufprallstellung vor. Hierbei wird Bewegungsenergie des Fußgängers von dem beweglichen Teil zumindest teilweise aufgenommen. Dementsprechend ermöglicht eine Aufprallstellung des beweglichen Teils die Verletzungsgefahr des Fußgängers zu reduzieren.

Der erfindungsgemäße Überlastschutz an dem Aufstellmechanismus ermöglicht einen Fußgängerschutz oder Radfahrerschutz, welcher eine gezielte Deformation des Aufstellmechanismus erzielen kann, wobei die Deformation unabhängig vom Gewicht des beweglichen Teils ist. Nur die Kraft, welche auf das bewegliche Teil bei einem Lastfall ausgeübt wird, bewirkt bei dem erfindungsgemäßen Überlastschutz ein Absenken des beweglichen Teils und somit eine Bewegung des beweglichen Teils von der Schutzstellung in die Aufprallstellung.

Ein technischer Effekt des erfindungsgemäßen Aufstellmechanismus mit zumindest einem ersten Überlastschutz ermöglicht es, dass das bewegliche Teil lediglich im Lastfall von der Schutzstellung in eine Aufprallstellung bewegbar ist. Ein kraft-/lastabhängiger Überlastschutz kann entsprechend zur Verfügung gestellt werden. Somit ermöglicht die Erfindung, dass das bewegliche Teil lediglich bei Erreichen der im Lastfall vorgesehenen Krafteinwirkung sich von der Schutzstellung in die Aufprallstellung bewegen kann. Somit ist eine gezielte, d. h. lastabhängige Aktivierung des Fußgängerschutzes ermöglicht.

Der erfindungsgemäße Aufstellmechanismus weist einen Aufstellhebel, ein mit dem Aufstellhebel und dem Gesperre, insbesondere einer Sperrklinke, in Verbindung bringenbaren Steuerhebel und einen mit dem Steuerhebel in Kontakt bringbares Aktivierungsmittel auf. Bevorzugt ist der Steuerhebel durch eine Feder vorgespannt. Der Aufstellhebel des Aufstellmechanismus wirkt dabei mit dem Schlosshalter des beweglichen Teils zusammen, sodass für die Aufprallstellung, der Aufstellhebel den Schlosshalter des beweglichen Teils in Richtung Offenstellung des beweglichen Teils bewegt. Hierfür ist der Aufstellhebel mit einem Steuerhebel in Kontakt bringbar, wobei der Steuerhebel eine Kraft von einem Aktivierungsmittel auf den Aufstellhebel überträgt, sodass der Schlosshalter mit einer Kraft beaufschlagt wird.

Der Steuerhebel ist drehbar gelagert und ist in Wirkverbindung mit einem Aktivierungsmittel bringbar, sodass in Unfallsituationen das Aktivierungsmittel den Steuerhebel derart mit einer Kraft beaufschlagt, dass der Steuerhebel den Aufstellhebel betätigt und somit der Schlosshalter das bewegliche Teil in Richtung Offenstellung bewegt. Darüber hinaus ist der Steuerhebel in Kontakt mit dem Gesperre, insbesondere einer Sperrklinke bringbar.

Bei dem Aktivierungsmittel kann es sich beispielsweise um ein elektromagnetisch oder pyrotechnisch betätigbares Aktivierungsmittel handeln. Je nach Ausführungsform des Aktivierungsmittels ergeben sich unterschiedliche Vorteile. Beim elektromagnetisch betätigten Aktivierungsmittel ist das Aktivierungsmittel reversibel einsetzbar, wohingegen bei einer pyrotechnischen Anwendung sehr hohe Kräfte und Geschwindigkeiten realisierbar sind.

Der Lastfall beschreibt den Fall, bei dem beispielsweise ein Fußgängerunfall vorliegt, und somit eine Überlast auf das bewegliche Teil ausgeübt wird. Die Überlast kann aber auch beispielsweise durch eine Fehlbenutzung erzeugt werden, bei der ein Benutzer die Motorhaube mit besonders großer Kraft zuschlägt. Last meint, eine Kraft, die der Schlosshalter bei einer Bewegung in Richtung der Schließvorrichtung und somit in Richtung Schließstellung auf die Schließvorrichtung ausübt.

Überlast meint eine Kraft oberhalb einer Schwelllast, also einem Schwellwert für eine Kraft. Durch die bekannte Korrelation von Masse, Beschleunigung und Kraft kann die Schwelllast auch eine schwere Beschleunigung beschreiben, wenn die Masse des beweglichen Teils bekannt ist und sonst kein Zusatzgewicht, zum Beispiel ein darauf belastender Fußgänger beim Fußgängercrash, mit der Motorhaube verbunden ist.

Über die Schließstellung hinaus abtauchende Position, d. h. die Aufprallstellung, meint, dass sich die Bewegung des Schlosshalter in Richtung Schlossschließvorrichtung hinaus bewegt. Abtauchen meint eine Bewegung in Schließbewegungsrichtung bzw. eine Bewegung des Schlosshalter in Richtung Aufstellhebel.

Bei übermäßiger Last/Überlast prallt oder drückt der Schlosshalter auf den Aufstellhebel mit einer Kraft oberhalb der Schwelllast, sodass die Schwelllast überschritten wird. Die Bewegung des Schlosshalter in Richtung Aufstellhebel wird dann entlang einer Bewegungsbahn insbesondere gleichförmig fortgeführt.

Der erfindungsgemäße Überlastschutz ermöglicht nunmehr, dass die Aufprallstellung des beweglichen Teils nur bei Überschreitung des Schwellwertes bzw. der Schwelllast erreichbar ist. Dementsprechend begrenzt der Überlastschutz die Bewegung des beweglichen Teils in die Aufprallstellung lastabhängig, sodass nur bei einer Überlast der Schlosshalter und somit das bewegliche Teil von der Schutzstellung in Richtung Aufprallstellung und somit auch in Richtung Schließstellung bewegt werden kann. Das hierdurch bewirkte Nachgeben des beweglichen Teil kann Verletzungen eines Fußgängers beim Aufprall auf die Motorhaube reduzieren. Vorzugsweise ermöglicht der Überlastschutz eine plastische Verformung an dem Aufstellmechanismus.

Erfindungsgemäß ist der Überlastschutz an dem Steuerhebel angeordnet. Dementsprechend wirkt eine plastische Verformung an einem Bereich des Steuerhebels. Wird somit ein Schwellwert bzw. eine Schwelllast des beweglichen Teils überschritten, so wirkt der Aufstellhebel des Aufstellmechanismus auf den Steuerhebel, wobei der Steuerhebel mit dem erfindungsgemäßen Überlastschutz ausgebildet ist und dieser nach Überschreiten der Schwelllast ein Absenken des beweglichen Teils in Richtung Aufprallstellung bewirkt.

Beim Fußgängerunfall und damit einer erzeugten Schwelllast auf das bewegliche Teil stützt sich der Steuerhebel zum einen an dem Aufstellhebel und zum anderen an einer Sperrklinke des Gesperres ab. Der Aufstellhebel wird von dem Schlosshalter mit der Kraft/Schwellkraft beaufschlagt und überträgt diese auf den Steuerhebel. Der Steuerhebel wiederum stützt sich an der Sperrklinke des Gesperre ab und überträgt somit die Schwelllast vom Steuerhebel auf die Sperrklinke.

Erfindungsgemäß ist nunmehr der Überlastschutz an dem Steuerhebel angeordnet, sodass bei Überschreiten der Schwelllast auf das beweglichen Teil, eine Kraft auf den Steuerhebel bewirkt und der Steuerhebel eine plastische Verformung erfährt. Dies geschieht vorzugsweise dadurch, dass der Steuerhebel sich an der Sperrklinke abstützt und somit vom Aufstellhebel derart mit einer Kraft beaufschlagt wird, dass das Abstützen an der Sperrklinke ein plastische Verformung des Steuerhebels bewirkt.

Vorzugsweise ist der Überlastschutz an dem Steuerhebel als eine Sollbruchstelle, insbesondere in Form einer Materialausnehmung am Steuerhebel ausgebildet. Die Sollbruchstelle ermöglicht somit eine plastische Verformung des Steuerhebels am Überlastschutz. Die Sollbruchstelle des Steuerhebels kann dabei derart dimensioniert werden, dass für einen vordefinierten Kraftwert/Schwelllast der Steuerhebel sich plastisch verformen kann. Besonders bevorzugt, weil einfach und kostengünstig herstellbar, ist der Überlastschutz und somit die Sollbruchstelle als eine Materialausnehmung am Steuerhebel ausgebildet. Besonders bevorzugt ist der Querschnitt des Steuerhebels im Bereich des Überlastschutz reduziert, sodass eine plastische Verformung des Steuerhebels bei einer definierten Schwelllast erzeugt werden kann.

Vorzugsweise kann sich der Steuerhebel bei Lastfall entlang einer Knickachse plastisch verformen. Durch das vorsehen der Sollbruchstelle, insbesondere der Materialausnehmung am Steuerhebel, kann ein aufwendiger Mechanismus zum Erlauben eines Abtauchen des Schlosshalter in die Schließvorrichtung eingespart werden, sodass die Anzahl der notwendigen Teile für die Zusatzfunktion eines Fußgängerschutzes reduziert werden kann.

Eine Sollbruchstelle ist in der Regel ein Bereich mit einem verjüngten Querschnitt, an dem bei einer Belastung durch den Schlosshalter die höchsten Materialspannungen auftreten, sodass der Überlastschutz als erstes an dieser Stelle also an der Sollbruchstelle, versagt, d. h. sich plastisch verformt oder bricht.

Dabei kann Knicken, ein Umknicken oder Abknicken um eine Knickachse bedeuten, sodass sich der Steuerhebel im Bereich des Kontaktbereiches mit der Sperrklinke um eine Knickachse verschränkt. Insbesondere erfolgt daher eine plastische Verformung entlang der Knickachse oder im Bereich der Knickachse.

Im Lastfall und damit beim Übertreten der Schwelllast, wird die Streckgrenze des Steuerhebels im Bereich des Überlastschutzes, insbesondere der Sollbruchstelle überschritten, sodass dort das Material des Steuerhebels zu fließen beginnt und sich plastisch verformt.

Die Schwelllast korreliert mit der Streckgrenze des Materials des Steuerhebels im Bereich des Überlastschutzes, der Materialdicke/dem Querschnitt in diesem Bereich des Steuerhebels.

Erfindungsgemäß kann es vorgesehen sein, dass der Steuerhebel einen Aktivierungsarm und einen Aufstellarm aufweist, wobei der Aufstellarm ein mit dem Aufstellhebel in Kontakt bringbares Betätigungselement und eine mit dem Gesperre, insbesondere der Sperrklinke, in Kontakt bringbare Stützelement aufweist und der Überlastschutz, insbesondere die Sollbruchstelle, an einer das Betätigungselement und das Stützelement verbindenden Führungskontur des Steuerhebels angeordnet ist.

Wie bereits zuvor erwähnt, weist der Steuerhebel eine Wirkverbindung bzw. Kontaktierung mit einem Aktivierungselement und dem Aufstellhebel auf. Darüber hinaus kann ein Kontakt des Aufstellhebels mit der Sperrklinke vorhanden sein. Ein Aktivierungsarm des Steuerhebels ist dabei derjenige Teil des Steuerhebels, welcher mit dem Aktivierungsmittel in Kontakt bringbar ist, sodass eine Kraft von dem Aktivierungsmittel auf den Steuerhebel über den Aktivierungsarm übertragen werden kann. Der Aufstellarm des Steuerhebels ist in Kontakt mit dem Aufstellhebel des Aufstellmechanismus bringbar, sodass durch eine von dem Aktivierungsmittel auf den Aktivierungsarm des Steuerhebels ausgeübte Kraft, über den Aufstellarm des Steuerhebels eine Kraft auf den Aufstellhebel übertragbar ist und der Aufstellhebel den Schlosshalter in eine Schutzposition und somit das bewegliche Teil aufstellen kann.

Erfindungsgemäß ist nunmehr der Uberlastschutz, insbesondere die Sollbruchstelle, an einer das Betätigungselement und das Stützelement verbindenden Stützkontur des Steuerhebels ausgebildet. Dementsprechend ist der Überlastschutz, insbesondere die Sollbruchstelle, zwischen dem Kontaktpunkt des Steuerhebels mit der Sperrklinke und dem Kontaktpunkt des Steuerhebels mit dem Aufstellhebel angeordnet. Der Bereich zwischen den beiden beschriebenen Kontaktpunkten kann somit die Sollbruchstelle aufweisen, sodass sich in diesem Bereich, der Steuerhebel plastisch verformen kann, wenn die Schwelllast auf das bewegliche Teil überschritten ist.

Im Rahmen der Erfindung kann das Gesperre, insbesondere die Sperrklinke, zumindest während einer Bewegung des beweglichen Teils von der Aufprallstellung in die Schutzstellung, eine Schließstellung und/oder eine Offenstellung entlang der Stützkontur gleiten. Dementsprechend kann die Sperrklinke des Gesperres während der Bewegung des beweglichen Teils von der Aufprallstellung in die Schutzstellung, die Schließstellung und oder die Offenstellung in Kontakt mit der Stützkontur des Steuerhebels sein, sodass sich die Sperrklinke an dem Steuerhebel im Bereich der Stützkontur abstützt. Dabei kann die Sperrklinke sich lediglich abschnittsweise am Steuerhebel bzw. abschnittsweise an der Stützkontur abstützen.

Die Stützkontur des Steuerhebels ermöglicht somit eine zumindest abschnittsweise geführte Bewegung der Sperrklinke entlang des Steuerhebels.

Vorteilhaft kann ein Führungselement mit einer Führungskontur an dem Überlastschutz, insbesondere der Sollbruchstelle, des Steuerhebels angeordnet sein, wobei die Führungskontur während einer Bewegung des beweglichen Teils von der Aufprallstellung in die Schutzstellung, eine Schließstellung und oder eine Offenstellung, mit der Sperrklinke in Kontakt bringbar ist. Das Führungselement ist dabei derart an dem Steuerhebel angeordnet, dass sich das Führungselement zumindest abschnittsweise im Bereich des Überlastschutzes, insbesondere der Sollbruchstelle des Steuerhebels befindet, und formschlüssig mit der Stützkontur des Steuerhebels angeordnet sein kann.

Das Führungselement ermöglicht es, dass bei der Ausbildung des Überlastschutzes, insbesondere in Form einer Sollbruchstelle bzw. Materialausnehmung am Steuerhebel die Sperrklinke trotz alledem entlang der Führungskontur bzw. Stützkontur des Steuerhebels gleiten kann. Dafür ist das Führungselement derart an dem Steuerhebel angeordnet, dass die Bewegung des Steuerhebels bzw. der Sperrklinke entlang des Steuerhebels im Wesentlichen Unterbrechung frei durchführbar ist.

Das Führungselement verhindert somit, dass die Sperrklinke eventuell in die Materialausnehmung der Sollbruchstelle bzw. des Überlastschutzes begleitet und somit ein Verkannten des Aufstellmechanismus bzw. des Verriegelungsmechanismus der Schließvorrichtung ermöglicht. Dementsprechend wird die Funktionssicherheit der Schließvorrichtung durch das Führungselement weiter verbessert.

Es ist des Weiteren denkbar, dass im Lastfall, das Betätigungsmittel in den Überlastschutz, insbesondere in die Sollbruchstelle bzw. Materialausnehmung verformt, insbesondere gebogen wird, wobei vorzugsweise das Führungselement eine Aufnahme für das Betätigungsmittel aufweist, sodass im Lastfall das Betätigungsmittel in der Aufnahme anordbar ist. D. h., dass das Betätigungsmittel nach plastischer Verformung in die Aufnahme des Führungselementes verformt bzw. gebogen oder gebrochen wird. Das Führungselement kann hierfür dementsprechend eine Aufnahme aufweisen, welche eine im wesentlichen formschlüssige Aufnahme des Betätigungselementes ermöglicht. Stützt sich das Betätigungselement somit derart an der Sperrklinke im Lastfall ab, dass das Betätigungselement plastisch verformt wird, so geschieht die plastische Verformung in Richtung Aufnahme des Führungselementes. Die plastische Verformung kann dabei auch beispielsweise durch die Aufnahme des Führungselementes unterbrochen bzw. eine weitere Kraftaufnahme erschwert werden. Darüber hinaus ermöglicht die Aufnahme des Führungselementes, dass das Betätigungselement des Steuerhebels lediglich bis in die Position in der Aufnahme plastisch verformt wird, sodass eine gewisse Führung der plastischen Verformung des Betätigungselementes ermöglicht ist.

Im Rahmen der Erfindung kann der Steuerhebel, insbesondere das Betätigungselement ein zumindest einen zweiten Überlastschutz aufweisen. Insbesondere ist der zweite Überlastschutz als Kerbe an dem Betätigungselement oder dem Steuerhebel ausgebildet. Über die Kerbe und somit den zweiten Überlastschutz kann die Schwelllast weiter definiert bzw. beeinflusst werden. Dementsprechend kann die Haltekraft des Aufstellhebels über den ersten und den zweiten Überlastschutz beeinflusst werden. Die plastische Verformung wird durch die Sollbruchstelle und den zweiten Überlastschutz, welcher vorzugsweise als Kerbe ausgebildet ist im Wesentlichen definierbar.

Gemäß einem weiteren Aspekt der Erfindung wird ein Betätigungsverfahren für eine Schließvorrichtung gemäß dem ersten Erfindungsaspekt, eines beweglichen Teils eines Fahrzeugs beansprucht.

Dementsprechend ergeben sich sämtliche Vorteile für das erfindungsgemäße Verfahren, wie sie bereits ausführlich mit Bezug auf die erfindungsgemäße Schließvorrichtung geschrieben worden sind.

Das Betätigungsverfahren ist für einen unfallbasierten Lastfall vorgesehen, in dem das bewegliche Teil sich in einer Schutzstellung befindet, wobei das Verfahren zumindest die folgenden Schritte aufweist:
a) Drehen des fahrzeugseitigen Aufstellhebels um eine Achse bei Übertragung einer definierten Aufprallkraft von einem an dem beweglichen Teil angeordneten Schlosshalter auf den fahrzeugseitigen Aufstellhebel,
b) Drehen des Steuerhebels um eine weitere Achse bei Beaufschlagung eines Lastmoments von dem Aufstellhebel auf den Steuerhebel,
c) Auslösen eines Überlastschutzes an den Steuerhebel,
d) Absenken des beweglichen Teils von der Schutzstellung in eine Aufprallstellung.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Sämtliche aus den Ansprüchen, der Beschreibung oder der Zeichnung hervorgehenden Merkmale und oder Vorteile, einschließlich konstruktiver Einzelheiten, räumliche Anordnungen und Verfahrensschritte, können sowohl für sich als auch in den verschiedensten Kombination Erfindung wesentlich sein. Dabei ist zu beachten, dass die Figuren nur beschreibenden Charakter haben und nicht dazu gedacht sind, die Erfindung in irgendeiner Form einzuschränken.

Bei den folgenden Ausführungsformen werden gleich oder äquivalente Elemente durch gleiche Bezugszeichen bezeichnet und auf deren doppelte Beschreibung wird verzichtet.

Es zeigt zeigen:
Figur 1 eine erste mögliche Ausführungsform einer erfindungsgemäßen Schließvorrichtung,
Figur 2 eine zweite mögliche Ausführungsform einer erfindungsgemäßen Schließvorrichtung,
Figur 3 ein Ausschnitt einer erfindungsgemäßen Schließvorrichtung der ersten Ausführungsform im Bereich des Überlastschutzes,
Figur 4 ein Ausschnitt einer erfindungsgemäßen Schließvorrichtung der zweiten Ausführungsform im Bereich des Überlastschutzes,
Figur 5 die zweite mögliche Ausführungsform einer erfindungsgemäßen Schließvorrichtung in der Aufprallstellung und
Figur 6 ein Kraftfahrzeug mit einem beweglichen Teil und einer erfindungsgemäßen Schließvorrichtung.

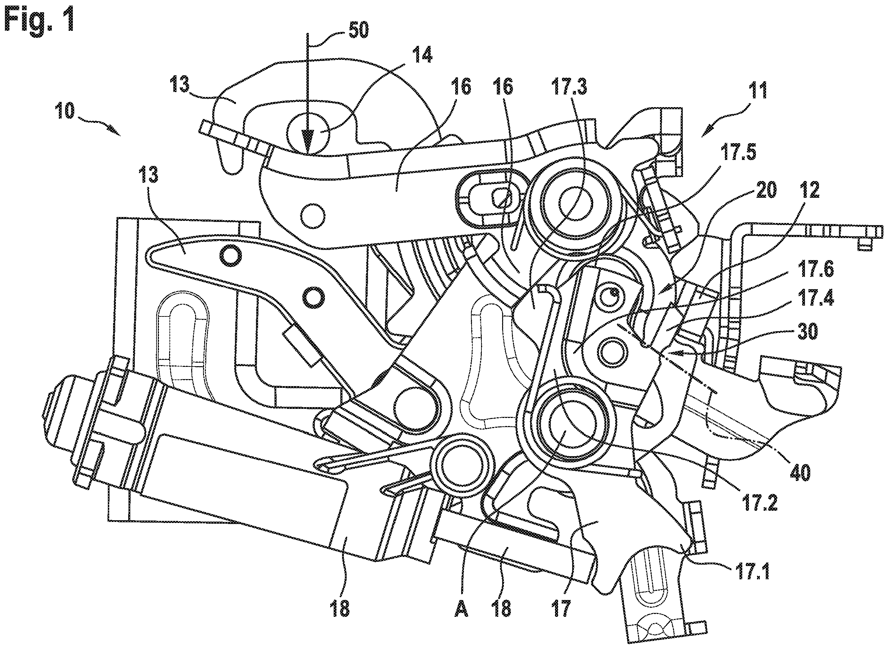

In der Figur 1 ist eine erste mögliche Ausführungsform einer erfindungsgemäßen Schließvorrichtung 10 dargestellt. Die Schließvorrichtung weist erfindungsgemäß ein Gesperre 11 auf, das an einer Karosserie eines Fahrzeugs lagerbar bzw. montierbar ist. Es ist ebenfalls denkbar, dass das Gesperre 11 an einem beweglichen Teil eines Fahrzeugs angeordnet wird. Das Gesperre 11 umfasst in der gezeigten Ausführungsform eine Sperrklinke 12 und eine Drehfalle 13. Die Sperrklinke 12 und die Drehfalle 13 sind in Wirkverbindung bringbar, sodass ein Schlosshalter 14 von dem Gesperre 11 verriegelt werden kann. Der Schlosshalter 14 ist vorzugsweise an einem beweglichen Teil eines Fahrzeugs, bspw. einer Haube oder Klappe, angeordnet. Dementsprechend kann das bewegliche Teil des Fahrzeugs von dem Gesperre 11 in einer Schließstellung positionsfest gehalten werden, sodass eine Bewegung in eine Offenstellung unterbunden ist. Darüber hinaus weist die Schließvorrichtung 10 einen Aufstellmechanismus 15 auf. der Aufstellmechanismus 15 umfasst zumindest einen Aufstellhebel 16, einen Steuerhebel 17 und ein Aktivierungsmittel 18.

Der Aufstellmechanismus 15 ermöglicht ein Anheben des beweglichen Teils, wobei gleichzeitig das Gesperre 11 den Schlosshalter 14 verriegelt. Dafür ist ein Aktivierungsmittel 18 vorgesehen, dass bspw. als pyrotechnisches Aktivierungsmittel ausgebildet ist und durch einen pyrotechnischen Effekt eine Kraft auf den Steuerhebel 17 ausübt. Der Steuerhebel 17 lenkt die Kraft auf den Aufstellhebel 16, sodass dieser in Kontakt mit dem Schlosshalter 14 kommt und diesen entgegen dem gezeigten Kraftvektor 50 bewegt.

In der Fig. 1 ist die Schließvorrichtung 10 in der Schutzstellung I gezeigt, in der ein bewegliches Teil gegenüber einer Schließstellung angehoben ist. Der Aufstellmechanismus 15 ist entsprechend als Hebelmechanik ausgebildet, wodurch eine durch das Aktivierungsmittel 18 erzeugte Kraft auf den Schlosshalter 14 übertragen werden kann. Für das Umlenken der Kraft vom Aktivierungsmittel 18 auf den Schlosshalter 14, ist dem Aktivierungmsittel 18 ein Steuerhebel 17 zugeordnet. Das Aktivierungsmittel 18 ist in der Fig.1 in einem aktivierten Zustand dargestellt, wobei ein Kontakt zwischen Aktivierungsmittel 18 und Steuerhebel 17 derart ausgebildet ist, dass der Steuerhebel 17 durch eine Kraft vom Aktivierungsmittel 18 um eine Achse A gedreht ist.

Der Steuerhebel 17 weist einen Aktivierungsarm 17.1 und einen Aufstellarm 17.2 auf. Der Aktivierungsarm 17.1 ist in Fig. 1 in Kontakt mit dem Aktivierungsmittel 18. Der Aufstellarm 17.2 ist gleichzeitig in Kontakt mit dem Aufstellhebel 16. Hierbei weist der Aufstellarm 17.2 in der gezeigten Ausführungsform ein Betätigungselement 17.3 auf, dass eine kurvenförmige Kontur des Aufstellarms 17.2 bildet und in Kontakt mit dem Aufstellhebel 16 steht. Bei einem Unfall, bei dem bspw. eine Person auf das bewegliche Teil stößt, wirkt die Kraft 50 auf den Aufstellhebel 16, wobei die Kraft durch den Schlosshalter 14 auf den Aufstellhebel 16 übertragen wird. Damit nunmehr Verletzungen der verunfallten Person zumindest reduziert werden können, ist ein Nachgeben des beweglichen Teils in Richtung Kraftvektor 50 gewünscht, sodass die Aufprallkräfte zumindest teilweise in eine Bewegung des beweglichen Teils von der Schutzstellung I in eine Aufprallstellung II umgesetzt werden können. In der Aufprallstellung ist das bewegliche Teil wieder um einen definierten Weg in Richtung Schließstellung bewegt.

Damit ein Absenken des beweglichen Teils und somit des Aufstellhebels 16 erzielt werden kann, ist erfindungsgemäß vorgeschlagen, an dem Steuerhebel 17 einen ersten Überlastschutz 20 anzuordnen. Bevorzugt ist es, wenn, wie in Fig. 1 dargestellt, darüber hinaus ein zweiter Überlastschutz 30 vorgesehen ist. Der Überlastschutz 20 weist in Fig. 1 einen Materialausnehmung 20 auf. Diese ist an dem Steuerhebel 17 zwischen einem Stützelement 17.4 und dem Betätigungselement 17.3 ausgebildet. Darüber hinaus ist in dem Bereich zwischen dem Stützelement 17.4 und dem Betätigungselement 17.3 eine Stützkontur 17.5 ausgebildet, wobei die Sperrklinke 12 bei einer Bewegung zwischen einer Blockierstellung, in der die Drehfalle blockiert ist, und einer Freigabestellung entlang der Stützkontur 17.5 geführt werden kann.

Wie bereits erläutert, befindet sich die Schließvorricvhtung 10 in Fig. 1 in der Schutzstellung I, in der das Gesperre 11 den Schlosshalter 14 verriegelt. Dazu ist die Drehfalle 13 um den Schlosshalter 14 angeordnet, wobei gleichzeitig die Sperrklinke 12 die Drehfalle 13 blockiert. Dabei kontaktiert die Sperrklinke 12 den Steuerhebel 17 im Bereich des Stützelementes 17.4, das Stützelement 17.4 liegt also an der Sperrklinke 12 an.

Darüber hinaus weist der Steuerhebel 17 in der Fig. 1 einen zweiten Überlastschutz 30 im Bereich des Stützelementes 17.4 auf.

Der Überlastschutz 20 und der Überlastschutz 30 sind in der Ausführungsform gemäß Fig. 1 als Materialausnehmungen, bspw. als Kerbe, ausgebildet, sodass eine Verformung des Stützelementes ermöglicht ist, wenn der Aufstellhebel 16 in die Aufprallstellung bewegt wird.

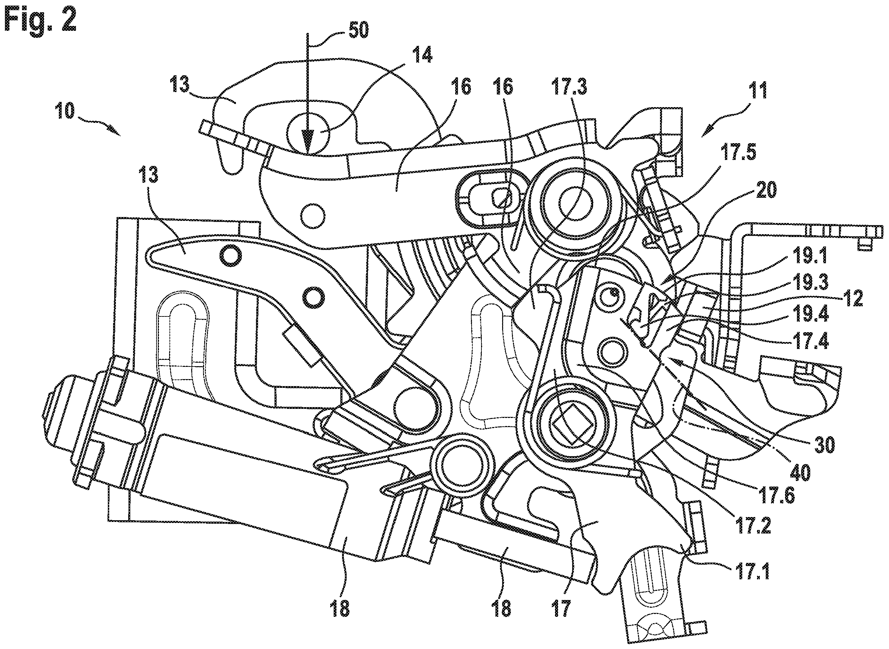

Die Fig. 2 zeigt eine weitere mögliche Ausführungsform der erfindungsgemäßen Schließvorrichtung 10 auf. Die zweite Ausführungsform unterscheidet sich dabei lediglich durch ein zusätzliches Führungselement 19 an dem ersten Überlastschutz 20. Dementsprechend soll im Folgenden nur auf die Unterschiede näher eingegangen werden.

Das erfindungsgemäße Führungselement 19 weist einen ersten Abstützarm 19.3 und einen zweiten Abstützarm 19.4 auf. Die beiden Abstützarme 19.3 und 19.4 sind dabei in dem Überlastschutz, in Fig. 2 also in der Materialausnehmung 20, angeordnet und zumindest abschnittsweise überkreuzt angeordnet. In Fig. 2 sind die beiden Abstützarme 19.3 und 19.4 hintereinander angeordnet (ausgehend von der gezeigten Frontansicht). Durch diese Anordnung und die im Wesentlichen z-förmige Ausbildung der Abstützarme 19.3 und 19.4 ist eine Aufnahme 19.2 und eine Führungskontur 19.1 gebildet. Die Führungskontur 19.1 ermöglicht eine Fortführung der Stützkontur 17.5 des Steuerhebels 17 trotz der Materialausnehmung 20. Die Führungskontur 19.1 bildet somit den Vorteil, dass die Sperrklinke 12 bei einem Gleiten über die Stützkontur 17.5 nicht in die Materialausnehmung 20 abrutscht oder sich verhakt. Die beiden Abstützarme bilden darüber hinaus eine Aufnahme 19.2 für das Stützelement 17.4, für den Fall, dass das Stützelement 17.4 um die Knickachse 40 verformt ist (wie später näher erläutert).

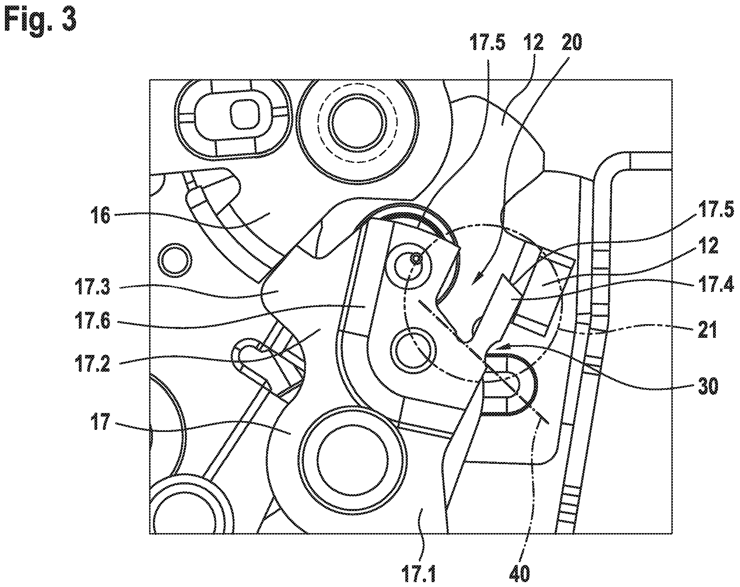

In Fig. 3 ist ein Ausschnitt der erfindungsgemäßen Schließvorrichtung aus Fig. 1 gezeigt. In der Fig. 3 wird insbesondere der Überlastschutzbereich 21 mit dem Überlastschutz 20 und dem Überlastschutz 30 dargestellt. Darüber hinaus ist das Zusammenspiel der Mechanik des Aufstellmechanismus 15, bestehend aus Sperrklinke 12, Aufstellhebel 16 und Steuerhebel 17 gezeigt.

Der Aufstellhebel 16 ist nur in dem Kontaktbereich mit dem Steuerhebel dargestellt. Diese kontaktieren an dem Betätigungselement 17.3 im Bereich des Aufstellarms 17.2 des Steuerhebels 17. Der Aufstellarm 17.2, welcher den oberen Teil des Steuerarms 17 bildet, weist darüber hinaus eine Verstärkungskontur 17.6 im Bereich des ersten und zweiten Überlastschutzes 20, 30 auf. Die Verstärkungskontur 17.6 kann eine Prägung oder als Materialverstärkung ausgebildet sein und verstärkt den Steuerhebel 17 im Bereich des ansonsten durch den Überlastschutz 20, 30 geschwächten Aufstellarms 17.2.

Die Fig. 3 zeigt darüber hinaus die Kontaktierung der Sperrklinke 12 mit dem Stützelement 17.4, wodurch eine Bewegung des Aufstellhebels 16 in Richtung einer Aufprallstellung (also ein Absenken des beweglichen Teils)zumindest teilweise unterbunden ist.

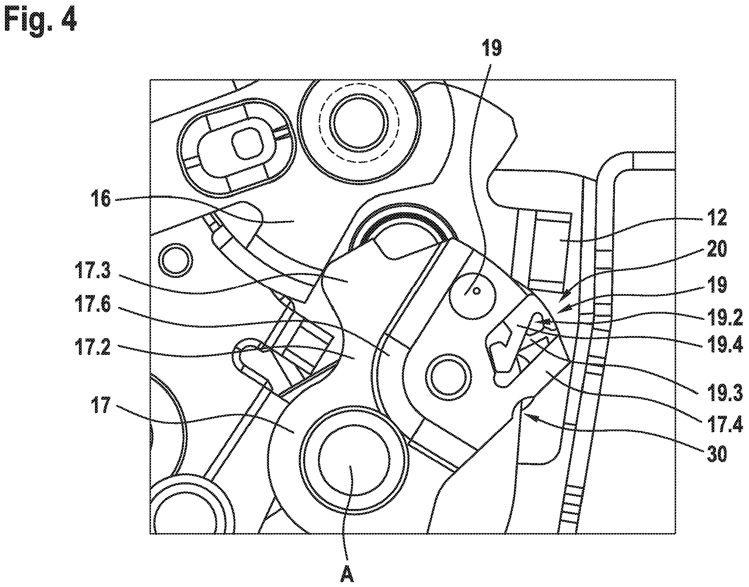

Die Fig. 4 zeigt eine Teilansicht der Schließvorrichtung 10 aus der Fig. 2. Jedoch befindet sich die Schließvorrichtung in der Schließstellung. Die Schließstellung beschreibt hierbei eine Position des beweglichen Teils, bspw. einer Haube oder Klappe, in der diese im Wesentlichen bündig mit der Karosserie des Fahrzeugs angeordnet ist. Dies entspricht der normalen Stellung der Haube oder Klappe während der Fahrt eines Kraftfahrzeugs. Der Aufstellhebel 16 ist somit in Fig. 4 gegenüber den Figuren 1 bis 3 ein wenig abgesenkt. Dementsprechend ist der mit dem Aufstellhebel 16 in Kontakt befindliche Steuerhebel 17 um die Achse A gedreht. Wie bereits zu Fig. 2 erläutert, weist der Steuerhebel 17 auch in Fig. 4 ein erfindungsgemäßes Führungselement 19 auf, sodass auf die nähere Gestaltung auf die Beschreibung zu Fig. 2 verwiesen wird.

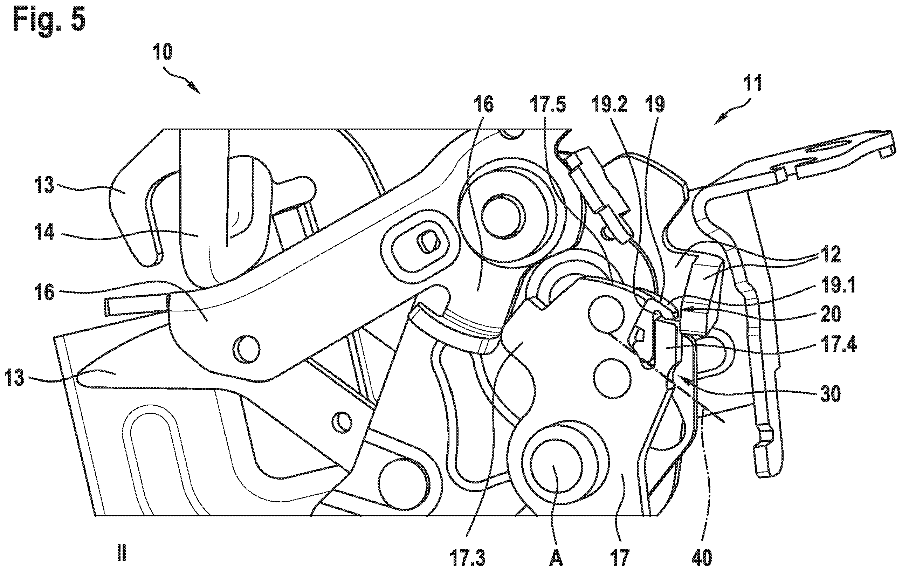

Die Fig. 5 zeigt die zweite mögliche erfindungsgemäße Ausführungsform, wie in Fig. 2 und 5 dargestellt, der Schließvorrichtung 10 in der Aufprallstellung II.

In der Aufprallstellung II ist das Stützelement 17.4 in die Aufnahme 19.2 des Führungselement 19 um die Knickachse 40 verformt. Es ist deutlich erkennbar, dass die erfindungsgemäße Führungskontur 19.1 des Führungselemente 19 nunmehr die Gefahr eines sonst möglichen Verhakens der Sperrklinke 12 an dem Steuerhebel 17 zumindest reduziert oder sogar ein Verhaken vollständig verhindert. Die abgerundete Führungskontur 19.1 schließt sich der Stützkontur 17.5 des Steuerhebels 17 an. Somit kann die Sperrklinke auch nach Erreichen der Aufprallstellung zurückbewegt werden, sodass die Schließvorrichtung auch nach einem Aufprall einer Person auf das bewegliche Teil betätigbar ist. Das Führungselement 19 stellt somit eine einwandfrei Funktion des Gesperres auch nach einem Aufprall sicher.

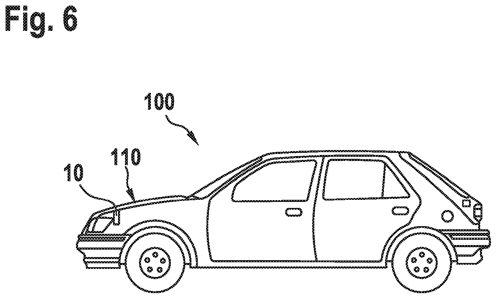

Die Fig. 6 zeigt ein Fahrzeug 100 in Form eines Kraftfahrzeugs 100. Das Kraftfahrzeug 100 weist ein bewegliches Teil 110 in Form einer Haube, insbesondere Motorhaube, mit einer erfindungsgemäßen Schließvorrichtung 10 auf. Bei einem Unfall, bei dem bspw. mit einem Fußgänger oder Radfahrer, würde die Haube 110 durch die erfindungsgemäße Schließvorrichtung 10 zuerst in eine Schutzstellung überführt werden, in der die Haube 110 einen definierten Stellweg angehoben ist. Fällt daraufhin eine Person auf die Haube 110, so kann diese durch die erfindungsgemäße Schließvorrichtung 10 aufgrund des ersten und/oder zweiten Überlastschutzes in die Aufprallstellung bewegt werden, sodass die Risiken einer schweren Verletzung der Person reduziert werden können.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, im Rahmen der vorliegenden Erfindung wie in den Ansprüchen definiert.

### Bezugszeichenliste

- 10: Schließvorrichtung
- 11: Gesperre
- 12: Sperrklinke
- 13: Drehfalle
- 14: Schlosshalter
- 15: Aufstellmechanismus
- 16: Aufstellhebel
- 17: Steuerhebel
- 17.1: Aktivierungsarm
- 17.2: Aufstellarm
- 17.3: Betätigungselement
- 17.4: Stützelement
- 17.5: Stützkontur
- 17.6: Verstärkungskontur
- 18: Aktivierungsmittel
- 19: Führungselement
- 19.1: Führungskontur
- 19.2: Aufnahme für Stützelement
- 19.3: erster Abstützarm
- 19.4: zweiter Abstützarm
- 20: erster Überlastschutz
- 21: Überlastschutzbereich
- 30: zweiter Überlastschutz
- 40: Knickachse
- 50: Kraftvektor im Lastfall
- 100: Fahrzeug
- 110: bewegliches Teil
- I: Schutzstellung
- II: Aufprallstellung
- A: Drehachse von Steuerhebel 17

## Patentansprüche

1. Schließvorrichtung (10) für ein bewegliches Teil (110) eines Fahrzeugs (100), insbesondere eine Frontklappe eines Fahrzeugs (100), aufweisend ein karosserieseitig lagerbares Gesperre (11) zur Aufnahme eines an dem beweglichen Teil (110) anordbaren Schlosshalters (14), einen mit dem Schlosshalter (14) in Kontakt bringbaren Aufstellmechanismus (15) zum Bewegen des beweglichen Teils (110) in zumindest eine Schutzstellung (I), wobei
der Aufstellmechanismus (15) zumindest einen ersten Überlastschutz (20) aufweist, wodurch das bewegliche Teil (110) im Lastfall von der Schutzstellung (I) in eine Aufprallstellung (II) bewegbar ist, wobei der Aufstellmechanismus (15) einen Aufstellhebel (16), einen mit dem Aufstellhebel (16) und dem Gesperre (11) in Verbindung bringbaren Steuerhebel (17) und ein mit dem Steuerhebel (17) in Kontakt bringbares Aktivierungsmittel (18) aufweist, wobei der Überlastschutz (20) an dem Steuerhebel (17) angeordnet ist, wobei der Steuerhebel (17) einen Aktivierungsarm (17.1) und einen Aufstellarm (17.2) aufweist, wobei der Aufstellarm (17.2) ein mit dem Aufstellhebel (16) in Kontakt bringbares Betätigungselement (17.3) und eine mit dem Gesperre (11) in Kontakt bringbare Stützelement (17.4) aufweist und der Überlastschutz (20) an einer das Betätigungselement (17.3) und das Stützelement (17.4) verbindenden Führungskontur (17.5) des Steuerhebels (17) angeordnet ist.

2. Schließvorrichtung (10) nach dem vorhergehenden Anspruch, **dadurch gekennzeichnet, dass** der Aufstellmechanismus (15) einen Aufstellhebel (16), einen mit dem Aufstellhebel (16) und einer Sperrklinke (12) in Verbindung bringbaren Steuerhebel (17) und ein mit dem Steuerhebel (17) in Kontakt bringbares Aktivierungsmittel (18) aufweist.

3. Schließvorrichtung (10) nach einem der vorhergehenden Ansprüche,
**dadurch gekennzeichnet, dass** der Überlastschutz (20) als Sollbruchstelle, insbesondere in Form einer Materialausnehmung am Steuerhebel (17) ausgebildet ist.

4. Schließvorrichtung (10) nach einem der vorhergehenden Ansprüche,
**dadurch gekennzeichnet, dass** der Steuerhebel (17) einen Aktivierungsarm (17.1) und einen Aufstellarm (17.2) aufweist, wobei der Aufstellarm (17.2) ein mit dem Aufstellhebel (16) in Kontakt bringbares Betätigungselement (17.3) und eine mit der Sperrklinke (12), in Kontakt bringbare Stützelement (17.4) aufweist und der Überlastschutz (20) an einer das Betätigungselement (17.3) und das Stützelement (17.4) verbindenden Führungskontur (17.5) des Steuerhebels (17) angeordnet ist.

5. Schließvorrichtung (10) nach einem der vorhergehenden Ansprüche,
**dadurch gekennzeichnet, dass** das Gesperre (11), insbesondere die Sperrklinke (12), zumindest während einer Bewegung des beweglichen Teils (110) von der Aufprallstellung (II) in die Schutzstellung (I), eine Schließstellung und/oder eine Offenstellung zumindest abschnittsweise entlang der Stützkontur (17.5) gleitet.

6. Schließvorrichtung (10) nach einem der vorhergehenden Ansprüche,
**dadurch gekennzeichnet, dass** ein Führungselement (19) mit einer Führungskontur (19.1) an dem Überlastschutz (20) des Steuerhebels (17) angeordnet ist und die Führungskontur (19.1) während einer Bewegung des beweglichen Teils von der Aufprallstellung (II) in die Schutzstellung (I), eine Schließstellung und/oder eine Offenstellung mit der Sperrklinke (12) in Kontakt bringbar ist.

7. Schließvorrichtung (10) nach Anspruch 6,
**dadurch gekennzeichnet, dass** im Lastfall das Stützelement (17.4) in den ersten Überlastschutz verformt wird, insbesondere dass das Führungselement (19) eine Aufnahme (19.2) für das Stützelement (17.4) aufweist, sodass im Lastfall das Stützelement (17.4) in der Aufnahme (19.2) anordbar ist.

8. Schließvorrichtung (10) nach einem der vorhergehenden Ansprüche,
**dadurch gekennzeichnet, dass** der Steuerhebel (17) einen zweiten Überlastschutz (30) aufweist, insbesondere dass der zweite Überlastschutz (30) als Kerbe an dem Steuerhebel (17.4) ausgebildet ist.

9. Schließvorrichtung (10) nach einem der Ansprüche 6 bis 8, **dadurch gekennzeichnet, dass** das Führungselement (19) zumindest einen Abstützarm (19.3) aufweist, insbesondere dass der Abstützarm (19.3) im Wesentlichen Z-förmig ausgebildet ist.

10. Betätigungsverfahren für eine Schließvorrichtung (10) eines bewegliches Teils (110) eines Fahrzeugs (100) gemäß einem der vorhergehenden Ansprüche, für einen unfallbasierten Lastfall, in dem das bewegliche Teil sich in einer Schutzstellung befindet, aufweisend die Schritte:
a) Drehen des fahrzeugseitigen Aufstellhebels um eine Achse bei Übertragung einer definierten Aufprallkraft von einem an dem beweglichen Teil angeordneten Schlosshalter auf den fahrzeugseitigen Aufstellhebel,
b) Drehen des Steuerhebels um eine weitere Achse bei Beaufschlagung eines Lastmoments von dem Aufstellhebel auf den Steuerhebel,
c) Auslösen zumindest eines Überlastschutzes an dem Steuerhebel,
d) Absenken des beweglichen Teils von der Schutzstellung in eine Aufprallstellung.

## Claims

1. Latching device (10) for a movable part (110) of a vehicle (100), in particular a front hood of a vehicle (100), the device comprising a locking mechanism (11) which can be mounted on the body and is intended for receiving a latch holder (14) which can be arranged on the movable part (110), and comprising a positioning mechanism (15) which can be brought into contact with the latch holder (14) and is intended for moving the movable part (110) into at least one protective position (I), wherein the positioning mechanism (15) has at least one first overload protector (20) as a result of which, in a load condition, the movable part (110) can be moved from the protective position (I) into an impact position (II), wherein the positioning mechanism (15) has a positioning lever (16), a control lever (17) which can be connected to the positioning lever (16) and to the locking mechanism (11), and an activation means (18) which can be brought into contact with the control lever (17), wherein the overload protector (20) is arranged on the control lever (17), wherein the control lever (17) has an activating arm (17.1) and a positioning arm (17.2), wherein the positioning arm (17.2) has an actuation element (17.3) which can be brought into contact with the positioning lever (16), and a support element (17.4) which can be brought into contact with the locking mechanism (11), and the overload protector (20) is arranged on a guide contour (17.5) of the control lever (17) that connects the actuation element (17.3) and the support element (17.4).

2. Latching device (10) according to the preceding claim, **characterized in that** the positioning mechanism (15) has a positioning lever (16), a control lever (17) which can be connected to the positioning lever (16) and to a pawl (12), and an activation means (18) which can be brought into contact with the control lever (17).

3. Latching device (10) according to either of the preceding claims, **characterized in that** the overload protector (20) is designed as a predetermined breaking point, in particular in the form of a material recess on the control lever (17).

4. Latching device (10) according to any of the preceding claims, **characterized in that** the control lever (17) has an activating arm (17.1) and a positioning arm (17.2), the positioning arm (17.2) having an actuation element (17.3) which can be brought into contact with the positioning lever (16), and having a support element (17.4) which can be brought into contact with the pawl (12), and the overload protector (20) being arranged on a guide contour (17.5) of the control lever (17) that connects the actuation element (17.3) and the support element (17.4).

5. Latching device (10) according to any of the preceding claims, **characterized in that** the locking mechanism (11), in particular the pawl (12), slides at least in portions along the support contour (17.5) at least during a movement of the movable part (110) from the impact position (II) into the protective position (I), a closed position and/or an open position.

6. Latching device (10) according to any of the preceding claims, **characterized in that** a guide element (19) comprising a guide contour (19.1) is arranged on the overload protector (20) of the control lever (17) and the guide contour (19.1) can be brought into contact with the pawl (12) during a movement of the movable part from the impact position (II) into the protective position (I), a closed position and/or an open position.

7. Latching device (10) according to claim 6, **characterized in that**, in the load condition, the support element (17.4) is deformed into the first overload protector, in particular **in that** the guide element (19) has a receptacle (19.2) for the support element (17.4) such that, in the load condition, the support element (17.4) can be arranged in the receptacle (19.2).

8. Latching device (10) according to any of the preceding claims, **characterized in that** the control lever (17) has a second overload protector (30), in particular **in that** the second overload protector (30) is designed as a notch on the control lever (17.4).

9. Latching device (10) according to any of claims 6 to 8, **characterized in that** the guide element (19) has at least one support arm (19.3), in particular **in that** the support arm (19.3) is substantially Z-shaped.

10. Method for actuating a latching device (10) of a movable part (110) of a vehicle (100) according to any of the preceding claims, for an accident-related load condition in which the movable part is in a protective position, comprising the steps of:
a) rotating the vehicle-side positioning lever about an axis when a defined impact force is transmitted from a latch holder arranged on the movable part to the vehicle-side positioning lever,
b) rotating the control lever about a further axis when a load torque is applied from the positioning lever to the control lever,
c) triggering at least one overload protector on the control lever,
d) lowering the movable part from the protective position into an impact position.

## Revendications

1. Dispositif de verrouillage (10) pour une partie mobile (110) d'un véhicule (100), en particulier une trappe avant d'un véhicule (100), présentant un encliquetage (11) pouvant être monté côté carrosserie et destiné à recevoir un support de serrure (14) pouvant être disposé sur la partie mobile (110), un mécanisme de positionnement (15) pouvant être mis en contact avec le support de serrure (14) et destiné à déplacer la partie mobile (110) dans au moins une position de protection (I), le mécanisme de positionnement (15) présentant au moins une première protection contre les surcharges (20), moyennant quoi la partie mobile (110) peut être déplacée de la position de protection (I) à une position d'impact (II) dans le cas de charge, le mécanisme de positionnement (15) présentant un levier de positionnement (16), un levier de commande (17) pouvant être mis en liaison avec le levier de positionnement (16) et l'encliquetage (11) et un moyen d'activation (18) pouvant être mis en contact avec le levier de commande (17), la protection contre les surcharges (20) étant disposée sur le levier de commande (17), le levier de commande (17) présentant un bras d'activation (17.1) et un bras de positionnement (17.2), le bras de positionnement (17.2) présentant un élément d'actionnement (17.3) pouvant être mis en contact avec le levier de positionnement (16) et un élément de support (17.4) pouvant être mis en contact avec l'encliquetage (11) et la protection contre les surcharges (20) étant disposée sur un contour de guidage (17.5) du levier de commande (17) reliant l'élément d'actionnement (17.3) et l'élément de support (17.4).

2. Dispositif de verrouillage (10) selon la revendication précédente, **caractérisé en ce que** le mécanisme de positionnement (15) présente un levier de positionnement (16), un levier de commande (17) pouvant être mis en liaison avec le levier de positionnement (16) et un cliquet (12), et un moyen d'activation (18) pouvant être mis en contact avec le levier de commande (17).

3. Dispositif de verrouillage (10) selon l'une des revendications précédentes, **caractérisé en ce que** la protection contre les surcharges (20) est conçue comme un point de rupture cible, en particulier sous la forme d'un évidement de matériau sur le levier de commande (17).

4. Dispositif de verrouillage (10) selon l'une des revendications précédentes, **caractérisé en ce que** le levier de commande (17) présente un bras d'activation (17.1) et un bras de positionnement (17.2), le bras de positionnement (17.2) présentant un élément d'actionnement (17.3) pouvant être mis en contact avec le levier de positionnement (16) et un élément de support (17.4) pouvant être mis en contact avec le cliquet (12) et la protection contre les surcharges (20) étant disposée sur un contour de guidage (17.5) du levier de commande (17) reliant l'élément d'actionnement (17.3) et l'élément de support (17.4).

5. Dispositif de verrouillage (10) selon l'une des revendications précédentes, **caractérisé en ce que** l'encliquetage (11), en particulier le cliquet (12), coulisse au moins par parties le long du contour du support (17.5), au moins lors d'un mouvement de la partie mobile (110) de la position d'impact (II) à la position de protection (I), une position fermée et/ou une position ouverte.

6. Dispositif de verrouillage (10) selon l'une des revendications précédentes, **caractérisé en ce qu'**un élément de guidage (19) comportant un contour de guidage (19.1) est disposé sur la protection contre les surcharges (20) du levier de commande (17) et le contour de guidage (19.1) peut être mis en contact avec le cliquet (12) lors d'un mouvement de la partie mobile de la position d'impact (II) à la position de protection (I), une position fermée et/ou une position ouverte.

7. Dispositif de verrouillage (10) selon la revendication 6, **caractérisé en ce que**, dans le cas de charge, l'élément de support (17.4) est déformé dans la première protection contre les surcharges, en particulier **en ce que** l'élément de guidage (19) présente un logement (19.2) pour l'élément de support (17.4), de telle sorte que, dans le cas de charge, l'élément de support (17.4) peut être disposé dans le logement (19.2).

8. Dispositif de verrouillage (10) selon l'une des revendications précédentes, **caractérisé en ce que** le levier de commande (17) présente une seconde protection contre les surcharges (30), en particulier **en ce que** la seconde protection contre les surcharges (30) est conçue sous forme d'encoche sur le levier de commande (17.4).

9. Dispositif de verrouillage (10) selon l'une des revendications 6 à 8, **caractérisé en ce que** l'élément de guidage (19) présente au moins un bras de support (19.3), en particulier **en ce que** le bras de support (19.3) est sensiblement conçu en forme de Z.

10. Procédé d'actionnement pour un dispositif de verrouillage (10) d'une partie mobile (110) d'un véhicule (100) conformément à l'une des revendications précédentes, pour un cas de charge accidentel dans lequel la partie mobile se trouve dans une position de protection, présentant les étapes de :
a) rotation du levier de positionnement côté véhicule autour d'un axe lorsqu'une force d'impact définie est transmise d'un support de serrure disposé sur la partie mobile au levier de positionnement côté véhicule,
b) rotation du levier de commande autour d'un autre axe lorsqu'un couple de charge est appliqué du levier de positionnement au levier de commande,
c) déclenchement d'au moins une protection contre les surcharges sur le levier de commande,
d) abaissement de la partie mobile de la position de protection à une position d'impact.
